# EUROPÄISCHE PATENTANMELDUNG

(11) **EP 0 608 818 A1**
(43) Veröffentlichungstag der Anmeldung: **03.08.1994**
(21) Anmeldenummer: 94101009.2
(22) Anmeldetag: 25.01.1994
(51) Int. Cl.: B65G 47/90, B65G 47/32, B65G 49/08

(54) **Vorrichtung zum Greifen und Absetzen von Steinformlingen unter Lückenverringerung**

(30) Priorität: 27.01.1993 DE 4302116
(71) Anmelder: LANGENSTEIN & SCHEMANN GMBH, D-96450 Coburg (DE)
(72) Erfinder: Reissenweber, Frank, Dipl.-Ing., D-96145 Sesslach (DE)
(74) Vertreter: Böhme, Volker, Dipl.-Ing.

(57) **Zusammenfassung**

Es gibt eine Steuereinrichtung einer Vorrichtung, bei der die zu greifenden Steinformlinge 22 in Reihen 20 angeordnet sind, wobei in den Reihen je zwei Steinformlinge eine Lücke 23 zwischen sich bilden, bei der ein mit Greiferzangen 17 versehener Greiferkopf 9 in waagerechter 4 sowie in senkrechter 10 Richtung verfahrbar ist und bei der die Greiferzangen 17 in Greifergruppen angeordnet sind und zur Verringerung der Lücken 23 zwischen den Steinformlingen 22 eine Bewegbarkeit der Greifergruppen in Reihenrichtung 4 vorgesehen ist. Dabei ist es erwünscht, wenn die Lückenverringerung ohne waagerechte Bewegung der Greiferzangen am Greiferkopf durch Verfahren des Greiferkopfes selbst erfolgt, wobei auch weiterhin zum Absetzen aller Steinformlinge jeder Steinformling die Ablage nur einmal berühren soll. Dies ist erreicht, indem eine Ausbildung der Steuereinrichtung vorgesehen ist, bei der erst die erste Greifergruppe 21 ihre aufgesetzten Steinformlinge 22 freigibt, dann der Greiferkopf 9 einen lückenverringernden Fahrschritt macht, dann die zweite Greifergruppe auf Freigabe der aufgesetzten Steinformlinge gesteuert ist, dann der Greiferkopf einen zweiten lückenverringernden Fahrschritt macht usw., bis alle Greifergruppen bei aufgesetzten Steinformlingen freigegeben haben, und bei der die aufgesetzten Steinformlinge 22 der jeweils zur Freigabe vorgesehenen Greifergruppe 21 tiefer nach unten ragen als die Steinformlinge der noch nicht auf Freigabe gesteuerten Greifergruppe. Die Lückenverringerung wird durch Bewegungen, Fahrschritte des Greiferkopfes erreicht und es wird jeweils nur die aufzusetzende Gruppe von Steinformlingen aufgestoßen.

## Beschreibung

Die Erfindung betrifft eine Steuereinrichtung an einer Vorrichtung zum Greifen und Absetzen von Steinformlingen unter Lückenverringerung, bei der ein ebener Tisch für die zu greifenden Steinformlinge vorgesehen ist, die in zueinander parallelen Gruppen und dazu rechtwinkeligen Reihen angeordnet sind, wobei in den Reihen je zwei benachbarte Steinformlinge eine Lücke zwischen sich bilden, bei der ein mit abwärtsragenden Greiferzangen versehener Greiferkopf oberhalb des Tisches und einer ebenen Ablage angeordnet ist und in waagerechter sowie in senkrechter Richtung verfahrbar ist, bei der die Greiferzangen in mehreren zueinander parallelen Greifergruppen angeordnet sind und jede Greiferzange zwei in Gruppenrichtung gegeneinander bewegbare Greifbacken aufweist, bei der zur Verringerung der Lücken zwischen den Steinformlingen eine Bewegbarkeit der Greifergruppen in Reihenrichtung vorgesehen ist, und bei der eine Steuerung des Nachuntenragens der ergriffenen Steinformlinge und eine Freigabe der Steinformlinge durch die Greifer beim Aufsetzen der Steinformlinge auf der Ablage vorgesehen ist.

Bei einer bekannten (DE-PS 28 00 407) Vorrichtung dieser Art sind nach dem Ergreifen alle Greiferzangen gleich hoch angeordnet und ragen die Steinformlinge gleich weit aus den Greiferzangen nach unten heraus. Die Greiferzangen sind am Greiferkopf relativ zueinander in waagerechter Richtung bewegbar und werden zwecks Lückenverringerung gruppenweise aufeinander zu bewegt. Die Steinformlinge werden sämtliche gleichzeitig auf die Ablage gesetzt und die Greiferzangen werden sämtliche gleichzeitig auf Freigabe gesteuert. Jeder Steinformling kommt beim Absetzen mit der Ablage nur einmal in Berührung. Die Vorrichtung und deren Steuerung ist auf verschiedene Formate der Steinformlinge einstellbar. Die Einrichtungen, die am Greiferkopf nötig sind, um die lückenverringernde Bewegung der Greiferzangen gegeneinander zu verwirklichen, sind relativ aufwendig, insbesondere wegen der Formateinstellbarkeit.

Eine Aufgabe der Erfindung ist es daher, eine Steuereinrichtung der eingangs genannten Art zu schaffen, bei der die Lückenverringerung ohne waagerechte Bewegung der Greiferzangen am Greiferkopf durch Verfahren des Greiferkopfes selbst erfolgt, wobei auch weiterhin zum Absetzen aller Steinformlinge jeder Steinformling die Ablage nur einmal berühren soll. Die erfindungsgemäße Steuereinrichtung ist, diese Aufgabe lösend, dadurch gekennzeichnet, daß eine Ausbildung vorgesehen ist, bei der erst die erste Greifergruppe ihre aufgesetzten Steinformlinge freigibt, dann der Greiferkopf einen lückenverringernden Fahrschritt macht, dann die zweite Greifergruppe auf Freigabe der aufgesetzten Steinformlinge gesteuert ist, dann der Greiferkopf einen zweiten lückenverringernden Fahrschritt macht usw., bis alle Greifergruppen bei aufgesetzten Steinformlingen freigegeben haben, und bei der die aufgesetzten Steinformlinge der jeweils zur Freigabe vorgesehenen Greifergruppe tiefer nach unten ragen als die Steinformlinge der noch nicht auf Freigabe gesteuerten Greifergruppen.

Bei der Erfindung wird die Lückenverringerung nicht durch Bewegung der Greiferzangen, sondern durch Bewegungen, Fahrschritte, des gesamten Greiferkopfes erreicht. Nach dem Absetzen einer ersten Gruppe von Formlingen wird deren Lücke zur nachfolgenden Gruppe von Formlingen durch einen Fahrschritt des Greiferkopfes verringert. Dann wird die nachfolgende Gruppe von Formlingen abgesetzt. Damit beim Absetzen einer Gruppe von Formlingen die anderen, noch ergriffenen Formlinge nicht unnötig aufgestoßen werden, hängen diese weniger weit nach unten als die geraden abzusetzenden Formlinge. Da jedes Aufstoßen oder Aufsetzen die noch grünen Steinformlinge beschädigen könnte, wird ein zusätzliches Aufsetzen vermieden, obwohl alle Gruppen nacheinander aufgesetzt werden. Die Formlinge sind beim Erfassen auf dem Tisch, der z.B. von einem Förderband gebildet ist, gleich hoch angeordnet und nehmen beim Verfahren des Greiferkopfes zur Ablage gruppenweise verschiedene Höhe gestaffelt ein. Die vertikale Einstellbarkeit der Greiferzangen und die schrittweise Verfahrbarkeit des Greiferkopfes lassen sich einrichtungsmäßig recht einfach verwirklichen. Die schrittweise senkrechte und waagerechte Verfahrbarkeit wird mit den Antrieben vorgenommen, die auch dem senkrechten und waagerechten Verfahren des Greiferkopfes in Bezug auf und zwischen Tisch und Ablage dienen. Die erfindungsgemäße Steuereinrichtung läßt sich mit relativ wenig Aufwand an verschiedene Steinformlingformate anpassen.

Es ist denkbar, den Greiferkopf nach dem Aufsetzen und Freigeben einer Gruppe von Steinformlingen anzuheben, um den lückenverringernden Fahrschritt zu machen. Besonders zweckmäßig und vorteilhaft ist es jedoch, wenn die lückenverringernden Fahrschritte jeweils unmittelbar an die vorhergehende Freigabe anschließen und jeweils in einen nachfolgenden senkrechten Absetzschritt des Greiferkopfes übergehen. Dies vereinfacht die Steuereinrichtung und ist möglich, wenn die noch nicht freigegebenen Steinformlinge genügend Abstand von der Ablage haben.

Es ist denkbar, die gruppenweise Heb- und Senkbarkeit der Greiferzangen am Greiferkopf mittels Spindeln und steuerbaren Elektromotoren vorzusehen. Dies verlangt jedoch einen relativ großen Aufwand an Einrichtung und elektrischer Steuerung. Deshalb ist es angebracht, die Höheneinstellung der Greifergruppen beim Greifen und beim Absetzen mittels einer mechanischen Steuereinrichtung zu steuern. Es sollen als mittels einer mechanischen Steuereinrichtung die Greiferzangen beim Greifen sämtliche gleich weit abwärts ragen und zum Absetzen die Greiferzangen gruppenweise nacheinander jeweils eine mit Formlingen besetzte und am tiefsten angeordnete Gruppe von Greiferzangen haben, wobei diese mechanische Steuereinrichtung vereinfacht an verschiedene Steinformlingformate anpaßbar ist.

Eine besonders zweckmäßige und vorteilhafte Ausführungsform der Erfindung besteht also darin, daß jeweils die Greiferzangen einer Gruppe an einem Greiferträger angebracht sind und die Greiferträger mit dem restlichen Greiferkopf auf- und abverschiebbar verbunden sind, daß jedem Greiferträger endseitig Widerlager zum Auflegen zugeordnet sind und die Widerlager der verschiedenen Greiferträger gestaffelt ansteigend verschieden hoch angeordnet sind, daß den beiden Enden der Greiferträger zugeordnet an dem Greiferkopf aufund abbeweglich Brücken angebracht sind, die - bei zum Greifen zum Tisch abgesenktem Greiferkopf - in angehobener Stellung relativ zu einem geraden Brückensteg die Greiferträger gleich hoch belassen und mit nach unten gerichteten Brückenpfosten auf dem Tisch aufstehen, und die - bei nach dem Greifen angehobenem Greiferkopf - in abgesenkter Stellung die Greiferträger auf den verschieden hohen Widerlagern liegen lassen.

Der horizontale Fahrantrieb des Greiferkopfes ist in an sich bekannter Weise ausgebildet, um den Greiferkopf sich zwischen Tisch und Ablage hin- und herbewegen zu lassen und die vielen kleinen lückenvermindernden Fahrschritte machen zu lassen. Hiermit verkoppelt ist eine direkte oder indirekte Überwachung der jeweiligen Stellung des Greiferkopfes, wobei ein in der Steuereinrichtung vorgegebener Sollwert mit dem durch die Überwachung ermittelten Istwert verglichen wird. Es wird z.B. ein an sich bekannter Drehstromservomotor verwendet, dessen Rotor-Stellung mittelbar den Istwert wiedergibt und der mit dem in der Steuereinrichtung vorgegebenen Sollwert abgeglichen wird. In entsprechender Weise ist der vertikale Fahrantrieb des Greiferkopfes ausgebildet, der pro Greifergruppe einen kleinen Absetzschritt zu bewirken hat. Ein wesentlicher Vorteil der Erfindung ist, daß für das lückenvermindernde Absetzen der vertikale und der horizontale Fahrantrieb des Greiferkopfes herangezogen werden, die wegen der sonstigen Bewegungen des Greiferkopfes sowieso vorhanden sind.

In der Zeichnung ist eine bevorzugte Ausführungsform der Erfindung dargestellt und zeigt
- Fig.1: eine Vorderansicht einer Vorrichtung zum Greifen und Absetzen von Steinformlingen unter Lückenverringerung, mit einer Steuereinrichtung,
- Fig.2: die Steuereinrichtung gemäß Fig. 1 in einem gegenüber Fig. 1 vergrößerten Maßstab,
- Fig.3: einen Teil der Vorrichtung gemäß Fig. 1 in einem gegenüber Fig. 1 vergrößerten Maßstab und
- Fig.4: eine Seitenansicht des in Fig. 3 gezeigten Teiles der Vorrichtung.

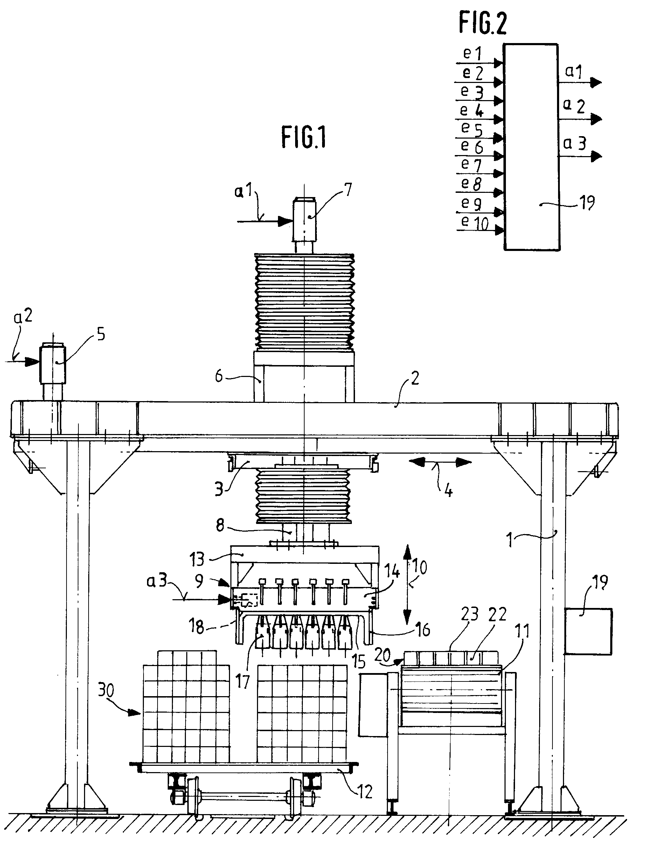

Die Vorrichtung gemäß Zeichnung trägt, wie Fig. 1 zeigt, auf Ständern 1 eine Brücke 2, an der ein Wagen 3 gemäß einem Doppelpfeil 4 waagerecht hin- und herverfahrbar ist, wozu auf der Brücke 2 ein Antriebsmotor 5 vorgesehen ist. Der Wagen 3 trägt oben auf einem Gestell 6 einen Antriebsmotor 7 und nach unten über ein Gestänge 8 einen Greiferkopf 9, der durch den Antriebsmotor 7 gemäß einem Doppelpfeil 10 senkrecht auf- und abverfahrbar ist. Unter der Brücke 2 ist ein Tisch 11 in Form eines endlosen Förderbandes vorgesehen, dem ein Standgestell und ein Antrieb zugeordnet sind. Unter der Brücke 2 befindet sich neben dem Tisch 11 eine Ablage 12 in Form eines Wagens, der mit Rädern in Schienen verfahrbar ist. Zu dem Greiferkopf 9 gehören abwärtsragende Greiferzangen 17, die vom als Gestell 13 ausgebildeten Rest des Greiferkopfes getragen sind, denen eine Leiste 14 von Widerlagern und eine Brücke 15 mit abwärtsragenden Brückenpfosten 16 zugeordnet sind. Den Greiferzangen 17 ist zum Öffnen und Schließen ein Antriebsmotor 18 zugeordnet, der Bestandteil des Greiferkopfes ist. Der Antriebsmotor ist ein Kompressor; er ist z.B. abseits der übrigen Vorrichtungen angeordnet und mit dem Greiferkopf über ein Schleppkabel verbunden. Die Vorrichtung umfaßt eine Steuereinrichtung, zu der ein Steuergerät 19 gehört.

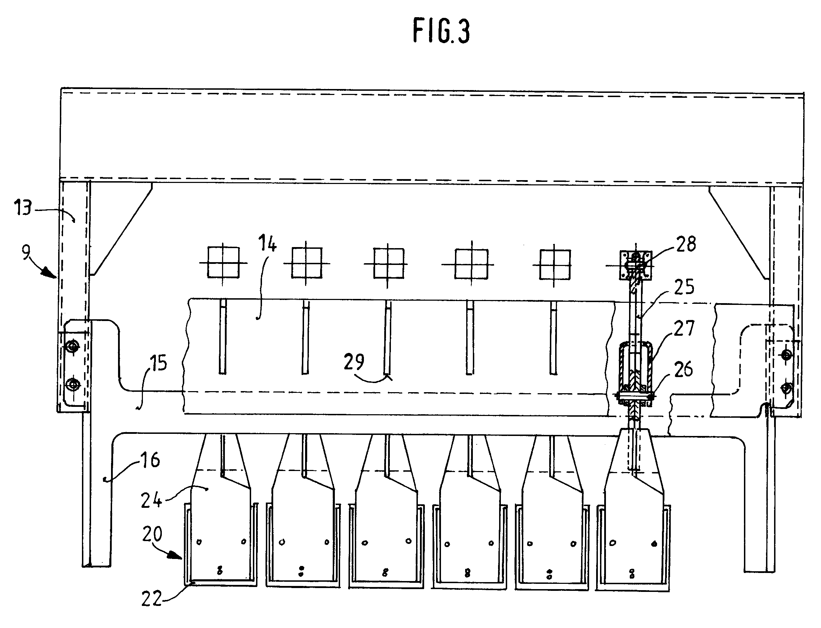

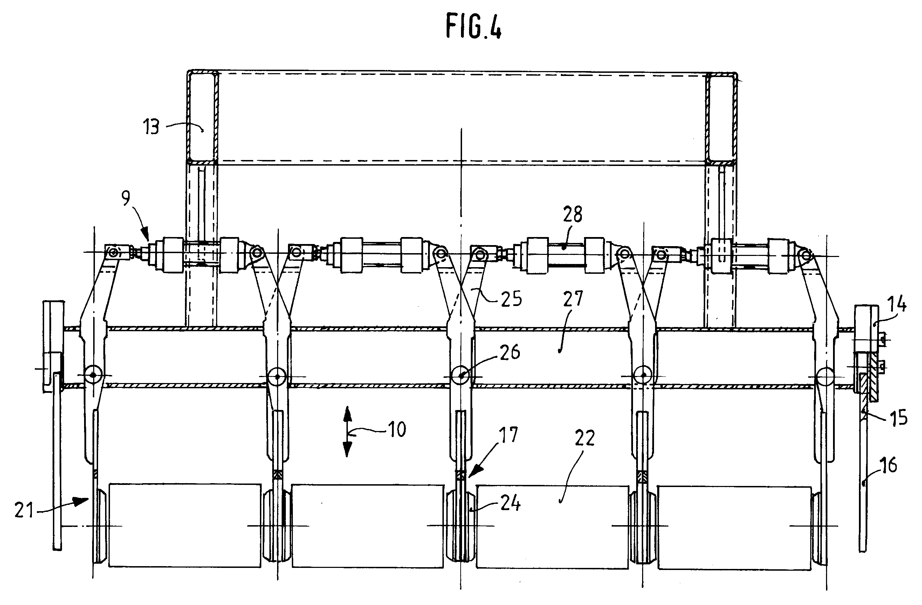

Die Greiferzangen 17 sind in Reihen 20 angeordnet, von denen eine in Fig. 3 gezeigt ist, und in Gruppen 21 angeordnet, von denen eine in Fig. 4 gezeigt ist. Jede Greiferzange 17 hält einen Steinformling 22 und zwei in einer Reihe 20 benachbarte Steinformlinge bilden gemäß Fig. 3 eine Lücke 23 zwischen sich. Jede Greiferzange 17 weist zwei Greifbacken 24 auf, die sich in den Gruppen 21 zwischen den Steinformlingen befinden. Die Greifbacken 24 jeder Greiferzange 17 werden nach oben von Armen 25 fortgesetzt, die bei Achsen 26 gruppenweise an Greiferträgern 27 gelagert sind und deren oberen Enden paarweise über Kolben-Zylinder-Einrichtungen 28 miteinander verbunden sind, die an den Antriebsmotor 18 in nicht gezeigter Weise angeschlossen sind. Jeder Greiferträger 27 bildet an jedem seiner beiden Ende ein Endstück, das auf einem Widerlager 29 von oben aufliegt, das von der Leiste 14 gebildet ist, die Bestandteil des Greiferkopfes 9 ist. Die beiden Leisten 14 sind an dem Gestell 13 auswechselbar angeschraubt. Die Widerlager 29 sind an den Leisten 14 am Grund von senkrechten Schlitzen gebildet, in welche die Endstücke der Greiferträger 27 eingeschoben sind. Die Widerlager 29 einer Leiste 14 befinden sich in Reihenrichtung gesehen auf einer in der Höhe ansteigenden Linie. Gemäß Fig. 3 sind die Greiferzangen 17 abgesenkt, liegen die Greiferträger 27 mit den Endstücken auf den Widerlagern 29 auf und liegen die unteren Enden der Steinformlinge 22 auf einer in Reihenrichtung ansteigenden Linie.

Diese Art der Aufhängung der Greiferzangen 17 ist Bestandteil des mechanischen Teiles der Steuereinrichtung zum Greifen und Absetzen der Steinformlinge 22 unter Verringerung der Lücken 23. Zu diesem mechanischen Teil der Steuereinrichtung gehört auch die Brücke 15, die am Gestell 13 auf- und abbeweglich angebracht ist, sich unter den Endstücken der Greiferträger 27 erstreckt und mit den endseitig angeordneten Brückenpfosten 16 abwärtsragt. Beim Greifen der Steinformlinge 22 am Tisch 11 wird durch ein Aufsetzen der unteren Enden der Brückenpfosten 16 und ein Nachobenschieben der Brücke 15 sichergestellt, daß sich alle Greiferzangen 17 auf der gleichen Höhe befinden. Ein elektrischer Teil der Steuereinrichtung umfaßt das Steuergerät 19, das gemäß Fig. 2 Eingänge e1-e10 aufweist und mit Ausgängen a1-a3 auf die übrige Vorrichtung arbeitet. Ein Ausgang a1 arbeitet auf den Antriebsmotor 7 für die Höhenverstellung des Greiferkopfes 9, ein Ausgang a2 arbeitet auf den Antriebsmotor für die Seitwärtsverstellung des Greiferkopfes 9 und ein Ausgang 3a arbeitet auf den Antriebsmotor 18 für die Betätigung der Greiferzangen 17. Der Ausgang a3 ist ein Sammelausgang, der einen Einzelausgang pro Gruppe von Greiferzangen aufweist. Über den Ausgang a3 und den Antriebsmotor 18 wird erreicht, daß zum Greifen alle Greiferzangen 17 gemeinschaftlich schließen und zum Abgeben die Greiferzangen 17 gruppenweise nacheinander öffnen.

Die Eingänge e1-e10 dienen dem Eingeben der verschiedenen Werte, die beim Errichten eines Stapels 30 von Steinformlingen auf der Ablage 12 zu beachten sind. Es bedeuten:
- e1: = Format der Steinformlinge
- e2: = Gesamtzahl der Steinformlinge
- e3: = Distanz der Steinformlinge voneinander am Tisch
- e4: = gewünschte Distanz der Steinformlinge voneinander an der Ablage
- e5: = Anzahl und Position der Stapel auf der Ablage
- e6: = Anzahl der Schichten im Stapel
- e7: = Anzahl und Postion der Abschlußschicht
- e8: = Höhenstaffelung der Greiferzangen
- e9: = Höhe der Ablage
- e10: = Höhe der einzelnen Steinformlinge.

## Patentansprüche

1. Steuereinrichtung an einer Vorrichtung zum Greifen und Absetzen von Steinformlingen unter Lückenverringerung,
bei der ein ebener Tisch für die zu greifenden Steinformlinge vorgesehen ist, die in zueinander parallelen Gruppen und dazu rechtwinkeligen Reihen angeordnet sind, wobei in den Reihen je zwei benachbarte Steinformlinge eine Lücke zwischen sich bilden,
bei der ein mit abwärtsragenden Greiferzangen versehener Greiferkopf oberhalb des Tisches und einer ebenen Ablage angeordnet ist und in waagerechter sowie in senkrechter Richtung verfahrbar ist,
bei der die Greiferzangen in mehreren zueinander parallelen Greifergruppen angeordnet sind und jede Greiferzange zwei in Gruppenrichtung gegeneinander bewegbare Greifbacken aufweist,
bei der zur Verringerung der Lücken zwischen den Steinformlingen eine Bewegbarkeit der Greifergruppen in Reihenrichtung vorgesehen ist,
bei der eine Steuerung des Nachuntenragens der ergriffenen Steinformlinge und eine Freigabe der Steinformlinge durch die Greifer beim Aufsetzen der Steinformlinge auf der Ablage vorgesehen ist,
**dadurch gekennzeichnet**,
daß eine Ausbildung vorgesehen ist,
bei der erst die erste Greifergruppe (21) ihre aufgesetzten Steinformlinge (22) freigibt, dann der Greiferkopf (9) einen lückenverringernden Fahrschritt macht, dann die zweite Greifergruppe auf Freigabe der aufgesetzten Steinformlinge gesteuert ist, dann der Greiferkopf einen zweiten lückenverringernden Fahrschritt macht usw., bis alle Greifergruppen bei aufgesetzten Steinformlingen freigegeben haben, und
bei der die aufgesetzten Steinformlinge (22) der jeweils zur Freigabe vorgesehenen Greifergruppe (21) tiefer nach unten ragen als die Steinformlinge der noch nicht auf Freigabe gesteuerten Greifergruppen.

2. Steuereinrichtung nach Anspruch 1, **dadurch gekennzeichnet**, daß die lückenverringernden Fahrschritte jeweils unmittelbar an die vorhergehende Freigabe anschließen und jeweils in einen nachfolgenden senkrechten Absetzschritt des Greiferkopfes (9) übergehen.

3. Steuereinrichtung nach Anspruch 1 oder 2, wobei jeweils die Greiferzangen einer Greifergruppe an einem Greiferträger angebracht sind und die Greiferträger mit dem restlichen Greiferkopf auf und ab verschiebbar verbunden sind, **dadurch gekennzeichnet**, daß jedem Greiferträger (27) endseitig Widerlager (29) zum Auflegen zugeordnet sind und die Widerlager der verschiedenen Greiferträger gestaffelt ansteigend verschieden hoch angeordnet sind, daß den beiden Enden der Greiferträger (27) zugeordnet an dem Greiferkopf (9) auf und ab beweglich Brücken (15) angebracht sind, die - bei zum Greifen zum Tisch (11) abgesenktem Greiferkopf - in angehobener Stellung relativ zu einem geraden Brücksteg die Greiferträger gleich hoch belassen und mit nach unten gerichteten Brückenpfosten (16) auf dem Tisch aufstehen, und die - bei nach dem Greifen angehobenem Greiferkopf - in abgesenkter Stellung die Greiferträger auf den verschieden hohen Widerlagern (29) liegen lassen.
